# EUROPEAN PATENT SPECIFICATION

(11) **EP 3 605 925 B1**
(45) Date of publication and mention of the grant of the patent: **02.03.2022**
(21) Application number: 18774215.0
(22) Date of filing: 29.03.2018
(51) Int. Cl.: H04L 5/00, H04L 5/06, H04W 52/52

(54) **METHOD FOR ALLOCATING RESOURCE FOR MULTIPLE SIGNALS IN WIRELESS COMMUNICATION SYSTEM AND APPARATUS THEREFOR**
VERFAHREN ZUR RESSOURCENZUWEISUNG FÜR MEHRERE SIGNALE IN EINEM DRAHTLOSKOMMUNIKATIONSSYSTEM UND VORRICHTUNG DAFÜR
PROCÉDÉ D'ATTRIBUTION DE RESSOURCE POUR DE MULTIPLES SIGNAUX DANS UN SYSTÈME DE COMMUNICATION SANS FIL ET APPAREIL ASSOCIÉ

(30) Priority: 29.03.2017 US 201762478569 P
(43) Date of publication of application: 05.02.2020
(73) Proprietor: LG Electronics Inc., Seoul 07336 (KR)
(72) Inventor: KIM, Youngtae, Seoul 06772 (KR); SEO, Hanbyul, Seoul 06772 (KR); LEE, Seungmin, Seoul 06772 (KR)
(74) Representative: Katérle, Axel
(86) International application number: PCT/KR2018/003731
(87) International publication number: WO 2018/182336

(56) References cited:
- WO-A1-2016/040290
- WO-A1-2017/026594
- KR-B1- 101 636 398
- US-A1- 2016 295 584
- SAMSUNG: "Coexistence between subframe TTI and sTTI operations for DL and UL", R1-166707, 3GPP TSG RAN WG1 Meeting 386, vol. RAN WG1, 13 August 2016 (2016-08-13), XP051132882, Gothenburg, Sweden
- CATT: "Discussion on multiplexing of normal TTI and sTTI in UL", RI-1702047, 3GPP TSG RAN WG1 Meeting #88, vol. RAN WG1, 7 February 2017 (2017-02-07) , XP051220961, Athens, Greece

## Description

### TECHNICAL FIELD

The present disclosure relates to a wireless communication system, and more particularly, to a method of allocating resources for multiple signals and apparatus therefor.

### BACKGROUND ART

A 3rd generation partnership project long term evolution (3GPP LTE) (hereinafter, referred to as 'LTE') communication system which is an example of a wireless communication system to which the present invention can be applied will be described in brief.

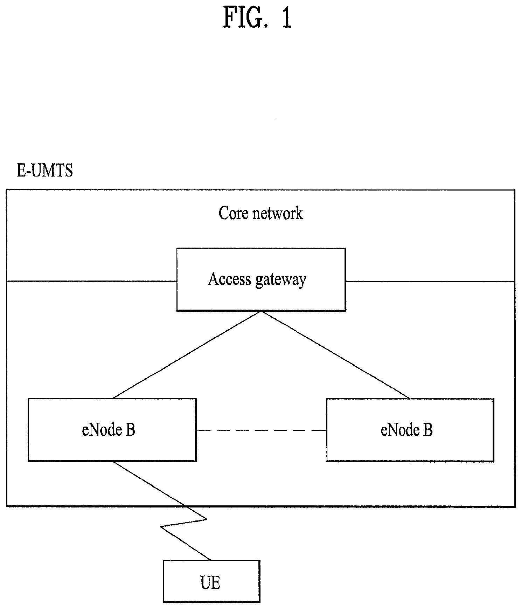

FIG. 1 is a diagram illustrating a network structure of an Evolved Universal Mobile Telecommunications System (E-UMTS) which is an example of a wireless communication system. The E-UMTS is an evolved version of the conventional UMTS, and its basic standardization is in progress under the 3rd Generation Partnership Project (3GPP). The E-UMTS may be referred to as a Long Term Evolution (LTE) system. Details of the technical specifications of the UMTS and E-UMTS may be understood with reference to Release 7 and Release 8 of "3rd Generation Partnership Project; Technical Specification Group Radio Access Network".

Referring to FIG. 1, the E-UMTS includes a User Equipment (UE), base stations (eNode B; eNB), and an Access Gateway (AG) which is located at an end of a network (E-UTRAN) and connected to an external network. The base stations may simultaneously transmit multiple data streams for a broadcast service, a multicast service and/or a unicast service.

One or more cells exist for one base station. One cell is set to one of bandwidths of 1.44, 3, 5, 10, 15 and 20MHz to provide a downlink or uplink transport service to several user equipments. Different cells may be set to provide different bandwidths. Also, one base station controls data transmission and reception for a plurality of user equipments. The base station transmits downlink (DL) scheduling information of downlink data to the corresponding user equipment to notify the corresponding user equipment of time and frequency domains to which data will be transmitted and information related to encoding, data size, and hybrid automatic repeat and request (HARQ). Also, the base station transmits uplink (UL) scheduling information of uplink data to the corresponding user equipment to notify the corresponding user equipment of time and frequency domains that can be used by the corresponding user equipment, and information related to encoding, data size, and HARQ. An interface for transmitting user traffic or control traffic may be used between the base stations. A Core Network (CN) may include the AG and a network node or the like for user registration of the user equipment. The AG manages mobility of the user equipment on a Tracking Area (TA) basis, wherein one TA includes a plurality of cells.

Although the wireless communication technology developed based on WCDMA has been evolved into LTE, request and expectation of users and providers have continued to increase. Also, since another wireless access technology is being continuously developed, new evolution of the wireless communication technology will be required for competitiveness in the future. In this respect, reduction of cost per bit, increase of available service, use of adaptable frequency band, simple structure and open type interface, proper power consumption of the user equipment, etc. are required.

WO/2016/040290 discloses devices and techniques for determining a transmission time interval (TTI) duration and/or varying the TTI duration. In the document the TTI duration is described to be varied based on one or more of: the timing a transmission, the amount of data available for transmission, or the type of data to be transmitted. Herein, the TTI duration may be for one or more of: the Enhanced Physical Downlink Control Channel (EPDCCH), the Physical Downlink Shared Channel (PDSCH), and/or the Physical Uplink Control Channel (PUCCH). One or more different TTI durations may be achieved by modifying OFDM symbols per TTI and/or symbol duration (e.g., subcarrier spacing).

### DISCLOSURE

### TECHNICAL PROBLEM

Based on the above discussion, the present disclosure proposes a method of allocating resources for multiple signals in a wireless communication system and apparatus therefor.

Technical tasks obtainable from the present invention are non-limited by the above-mentioned technical task. And, other unmentioned technical tasks can be clearly understood from the following description by those having ordinary skill in the technical field to which the present invention pertains.

### TECHNICAL SOLUTION

Preferred embodiments of the present disclosure are provided as defined in the appended claims. In an aspect of the present disclosure, provided herein is a method of allocating resources for multiple frequency division multiplexed (FDM) signals by a user equipment (UE) in a wireless communication system. The method may include: when a first signal with a first transmission time interval (TTI) is FDM with a second signal with a second TTI in a first period, performing sensing on a time resource corresponding to the second TTI; and allocating a time resource for the first signal in a second period based on a sensing result. In this case, the first TTI and the second TTI may occupy time resources with different lengths.

The time resource occupied by the first TTI may be shorter than that occupied by the second TTI. When a measurement value of the first signal is equal to or less than a threshold based on the sensing result, the first signal may be allocated to a time resource unoccupied by the second TTI in the second period.

The time resource occupied by the first TTI may be shorter than that occupied by the second TTI. When a starting time of the first TTI is not equal to that of the second TTI based on the sensing result, the first signal may be allocated to a time resource unoccupied by the second TTI in the second period.

When the starting time of the first TTI is equal to that of the second TTI, resource allocation may be performed such that the first and second signals are FDM in the second period.

The time resource occupied by the first TTI may be shorter than that occupied by the second TTI. When a difference between strength of the first and second signals and transmission power of a transmitting UE is equal to or more than a threshold based on the sensing result, the first signal may be allocated to a time resource unoccupied by the second TTI in the second period.

The time resource occupied by the first TTI may be shorter than that occupied by the second TTI. When the starting time of the first TTI is not equal to that of the second TTI based on the sensing result, the first signal is allocated from a time resource equal to the starting time of the second TTI in the second period.

The first signal may be configured such that interpolation is performed between reference signals mapped to an interval in which same automatic gain control (AGC) is performed.

The sensing result may be measured as reference signal receiver power (RSRP) or a received signal strength indicator (RSSI).

The first TTI may be composed of 14 orthogonal frequency division multiplexing (OFDM) symbols, and the second TTI may be composed of 7 OFDM symbols.

In another aspect of the present disclosure, provided herein is a UE for allocating resources for multiple FDM signals in a wireless communication system. The UE may include a radio frequency unit and a processor. The processor may be configured to: when a first signal with a first TTI is FDM with a second signal with a second TTI in a first period, perform sensing on a time resource corresponding to the second TTI; and allocate a time resource for the first signal in a second period based on a sensing result. In this case, the first TTI and the second TTI may occupy time resources with different lengths.

### ADVANTAGEOUS EFFECTS

According to the present disclosure, resources for multiple signals can be efficiently allocated in a wireless communication system.

Effects obtainable from the present invention are non-limited by the above mentioned effect. And, other unmentioned effects can be clearly understood from the following description by those having ordinary skill in the technical field to which the present invention pertains.

### DESCRIPTION OF DRAWINGS

The accompanying drawings, which are included to provide a further understanding of the invention and are incorporated in and constitute a part of this specification, illustrate embodiments of the invention and together with the description serve to explain the principles of the invention.
FIG. 1 schematically illustrates an E-UMTS network structure as an example of a wireless communication system.
FIG. 2 illustrates control plane and user plane structures of a radio interface protocol between a UE and an E-UTRAN on the basis of the 3GPP wireless access network standard.
FIG. 3 illustrates physical channels used in a 3GPP system and a general signal transmission method using the same.
FIG. 4 illustrates a radio frame structure used in LTE.
FIG. 5 illustrates a resource grid for a downlink slot.
FIG. 6 illustrates a structure of a downlink radio frame used in an LTE system.
FIG. 7 illustrates a structure of an uplink radio frame used in an LTE system.
FIG. 8 is a reference diagram to describe D2D (UE-to-UE) communication.
FIG. 9 is a reference diagram to describe a V2V scenario.
FIG. 10 and FIG. 11 are reference diagrams to describe a resource pool on a D2D scenario.
FIG. 12 is a reference diagram for explaining a scenario to which the present disclosure is applicable.
FIG. 13 shows a base station and a user equipment applicable to one embodiment of the present invention.

### BEST MODE

The following technology may be used for various wireless access technologies such as CDMA (code division multiple access), FDMA (frequency division multiple access), TDMA (time division multiple access), OFDMA (orthogonal frequency division multiple access), and SC-FDMA (single carrier frequency division multiple access). The CDMA may be implemented by the radio technology such as UTRA (universal terrestrial radio access) or CDMA2000. The TDMA may be implemented by the radio technology such as global system for mobile communications (GSM)/general packet radio service (GPRS)/enhanced data rates for GSM evolution (EDGE). The OFDMA may be implemented by the radio technology such as IEEE 802.11 (Wi-Fi), IEEE 802.16 (WiMAX), IEEE 802.20, and evolved UTRA (E-UTRA). The UTRA is a part of a universal mobile telecommunications system (UMTS). A 3rd generation partnership project long term evolution (3GPP LTE) is a part of an evolved UMTS (E-UMTS) that uses E-UTRA, and adopts OFDMA in a downlink and SC-FDMA in an uplink. LTE-advanced (LTE-A) is an evolved version of the 3GPP LTE.

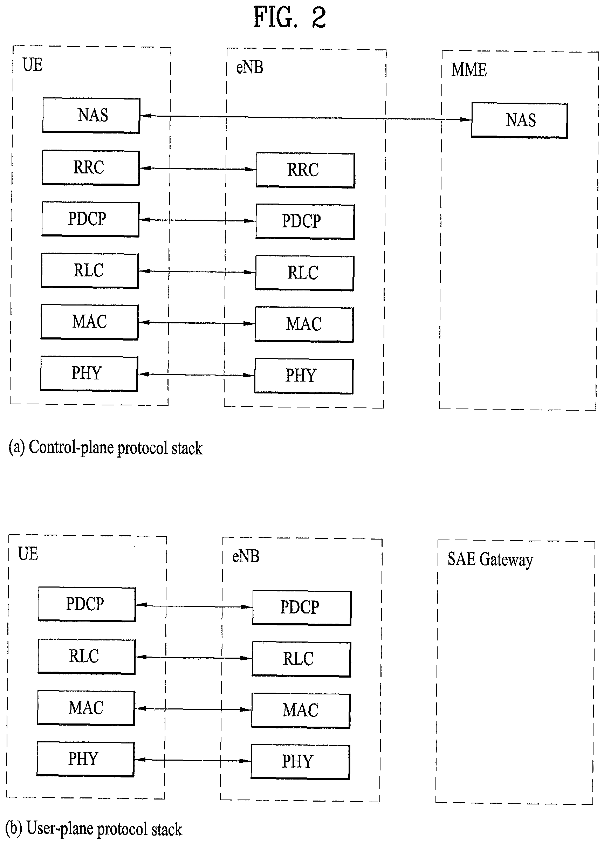

FIG. 2 is a diagram illustrating structures of a control plane and a user plane of a radio interface protocol between a user equipment and E-UTRAN based on the 3GPP radio access network standard. The control plane means a passageway where control messages are transmitted, wherein the control messages are used by the user equipment and the network to manage call. The user plane means a passageway where data generated in an application layer, for example, voice data or Internet packet data are transmitted.

A physical layer as the first layer provides an information transfer service to an upper layer using a physical channel. The physical layer is connected to a medium access control (MAC) layer via a transport channel, wherein the medium access control layer is located above the physical layer. Data are transferred between the medium access control layer and the physical layer via the transport channel. Data are transferred between one physical layer of a transmitting side and the other physical layer of a receiving side via the physical channel. The physical channel uses time and frequency as radio resources. In more detail, the physical channel is modulated in accordance with an orthogonal frequency division multiple access (OFDMA) scheme in a downlink, and is modulated in accordance with a single carrier frequency division multiple access (SC-FDMA) scheme in an uplink.

A medium access control (MAC) layer of the second layer provides a service to a radio link control (RLC) layer above the MAC layer via a logical channel. The RLC layer of the second layer supports reliable data transmission. The RLC layer may be implemented as a functional block inside the MAC layer. In order to effectively transmit data using IP packets such as IPv4 or IPv6 within a radio interface having a narrow bandwidth, a packet data convergence protocol (PDCP) layer of the second layer performs header compression to reduce the size of unnecessary control information.

A radio resource control (RRC) layer located on the lowest part of the third layer is defined in the control plane only. The RRC layer is associated with configuration, reconfiguration and release of radio bearers ('RBs') to be in charge of controlling the logical, transport and physical channels. In this case, the RB means a service provided by the second layer for the data transfer between the user equipment and the network. To this end, the RRC layers of the user equipment and the network exchange RRC message with each other. If the RRC layer of the user equipment is RRC connected with the RRC layer of the network, the user equipment is in an RRC connected mode. If not so, the user equipment is in an RRC idle mode. A non-access stratum (NAS) layer located above the RRC layer performs functions such as session management and mobility management.

One cell constituting a base station eNB is set to one of bandwidths of 1.4, 3.5, 5, 10, 15, and 20MHz and provides a downlink or uplink transmission service to several user equipments. At this time, different cells may be set to provide different bandwidths.

As downlink transport channels carrying data from the network to the user equipment, there are provided a broadcast channel (BCH) carrying system information, a paging channel (PCH) carrying paging message, and a downlink shared channel (SCH) carrying user traffic or control messages. Traffic or control messages of a downlink multicast or broadcast service may be transmitted via the downlink SCH or an additional downlink multicast channel (MCH). Meanwhile, as uplink transport channels carrying data from the user equipment to the network, there are provided a random access channel (RACH) carrying an initial control message and an uplink shared channel (UL-SCH) carrying user traffic or control message. As logical channels located above the transport channels and mapped with the transport channels, there are provided a broadcast control channel (BCCH), a paging control channel (PCCH), a common control channel (CCCH), a multicast control channel (MCCH), and a multicast traffic channel (MTCH).

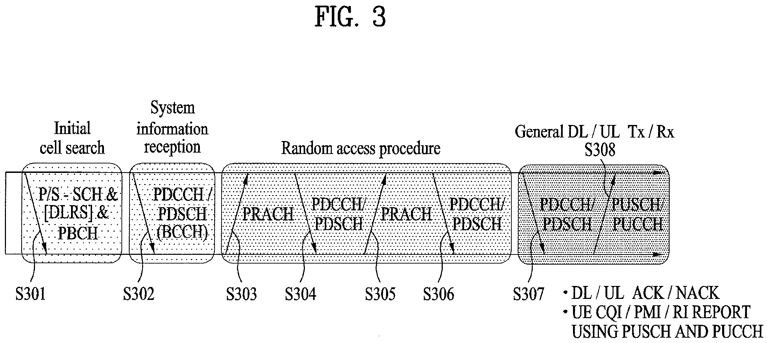

FIG. 3 is a diagram illustrating physical channels used in a 3GPP LTE system and a general method for transmitting a signal using the physical channels.

The user equipment performs initial cell search such as synchronizing with the base station when it newly enters a cell or the power is turned on at step S301. To this end, the user equipment synchronizes with the base station by receiving a primary synchronization channel (P-SCH) and a secondary synchronization channel (S-SCH) from the base station, and acquires information such as cell ID, etc. Afterwards, the user equipment may acquire broadcast information within the cell by receiving a physical broadcast channel (PBCH) from the base station. Meanwhile, the user equipment may identify a downlink channel status by receiving a downlink reference signal (DL RS) at the initial cell search step.

The user equipment which has finished the initial cell search may acquire more detailed system information by receiving a physical downlink shared channel (PDSCH) in accordance with a physical downlink control channel (PDCCH) and information carried in the PDCCH at step S302.

Afterwards, the user equipment may perform a random access procedure (RACH) such as steps S303 to S306 to complete access to the base station. To this end, the user equipment may transmit a preamble through a physical random access channel (PRACH) (S303), and may receive a response message to the preamble through the PDCCH and the PDSCH corresponding to the PDCCH (S304). In case of a contention based RACH, the user equipment may perform a contention resolution procedure such as transmission (S305) of additional physical random access channel and reception (S306) of the physical downlink control channel and the physical downlink shared channel corresponding to the physical downlink control channel.

The user equipment which has performed the aforementioned steps may receive the physical downlink control channel (PDCCH)/physical downlink shared channel (PDSCH) (S307) and transmit a physical uplink shared channel (PUSCH) and a physical uplink control channel (PUCCH) (S308), as a general procedure of transmitting uplink/downlink signals. Control information transmitted from the user equipment to the base station will be referred to as uplink control information (UCI). The UCI includes HARQ ACK/NACK (Hybrid Automatic Repeat and reQuest Acknowledgement/Negative-ACK), SR (Scheduling Request), CSI (Channel State Information), etc. In this specification, the HARQ ACK/NACK will be referred to as HARQ-ACK or ACK/NACK (A/N). The HARQ-ACK includes at least one of positive ACK (simply, referred to as ACK), negative ACK (NACK), DTX and NACK/DTX. The CSI includes CQI (Channel Quality Indicator), PMI (Precoding Matrix Indicator), RI (Rank Indication), etc. Although the UCI is generally transmitted through the PUCCH, it may be transmitted through the PUSCH if control information and traffic data should be transmitted at the same time. Also, the user equipment may non-periodically transmit the UCI through the PUSCH in accordance with request/command of the network.

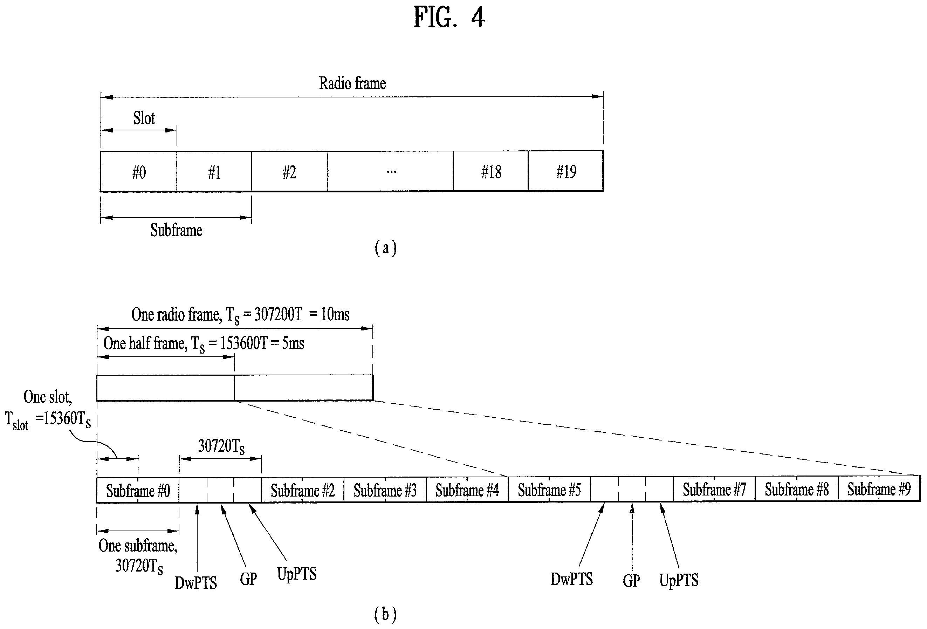

FIG. 4 is a diagram illustrating a structure of a radio frame used in an LTE system.

Referring to FIG. 4, in a cellular OFDM radio packet communication system, uplink/downlink data packet transmission is performed in a unit of subframe, wherein one subframe is defined by a given time interval that includes a plurality of OFDM symbols. The 3GPP LTE standard supports a type 1 radio frame structure applicable to frequency division duplex (FDD) and a type 2 radio frame structure applicable to time division duplex (TDD).

FIG. 4(a) is a diagram illustrating a structure of a type 1 radio frame. The downlink radio frame includes 10 subframes, each of which includes two slots in a time domain. A time required to transmit one subframe will be referred to as a transmission time interval (TTI). For example, one subframe may have a length of 1ms, and one slot may have a length of 0.5ms. One slot includes a plurality of OFDM symbols in a time domain and a plurality of resource blocks (RB) in a frequency domain. Since the 3GPP LTE system uses OFDM in a downlink, OFDM symbols represent one symbol interval. The OFDM symbol may be referred to as SC-FDMA symbol or symbol interval. The resource block (RB) as a resource allocation unit may include a plurality of continuous subcarriers in one slot.

The number of OFDM symbols included in one slot may be varied depending on configuration of a cyclic prefix (CP). Examples of the CP include an extended CP and a normal CP. For example, if the OFDM symbols are configured by the normal CP, the number of OFDM symbols included in one slot may be 7. If the OFDM symbols are configured by the extended CP, since the length of one OFDM symbol is increased, the number of OFDM symbols included in one slot is smaller than that of OFDM symbols in case of the normal CP. For example, in case of the extended CP, the number of OFDM symbols included in one slot may be 6. If a channel state is unstable like the case where the user equipment moves at high speed, the extended CP may be used to reduce inter-symbol interference.

If the normal CP is used, since one slot includes seven OFDM symbols, one subframe includes 14 OFDM symbols. At this time, first maximum three OFDM symbols of each subframe may be allocated to a physical downlink control channel (PDCCH), and the other OFDM symbols may be allocated to a physical downlink shared channel (PDSCH).

FIG. 4(b) is a diagram illustrating a structure of a type 2 radio frame. The type 2 radio frame includes two half frames, each of which includes four general subframes, which include two slots, and a special subframe which includes a downlink pilot time slot (DwPTS), a guard period (GP), and an uplink pilot time slot (UpPTS).

In the special subframe, the DwPTS is used for initial cell search, synchronization or channel estimation at the user equipment. The UpPTS is used for channel estimation at the base station and uplink transmission synchronization of the user equipment. In other words, the DwPTS is used for downlink transmission, whereas the UpPTS is used for uplink transmission. Especially, the UpPTS is used for PRACH preamble or SRS transmission. Also, the guard period is to remove interference occurring in the uplink due to multipath delay of downlink signals between the uplink and the downlink.

Configuration of the special subframe is defined in the current 3GPP standard document as illustrated in Table 1 below. Table 1 illustrates the DwPTS and the UpPTS in case of *T*ₛ = 1/(15000 × 2048) , and the other region is configured for the guard period.

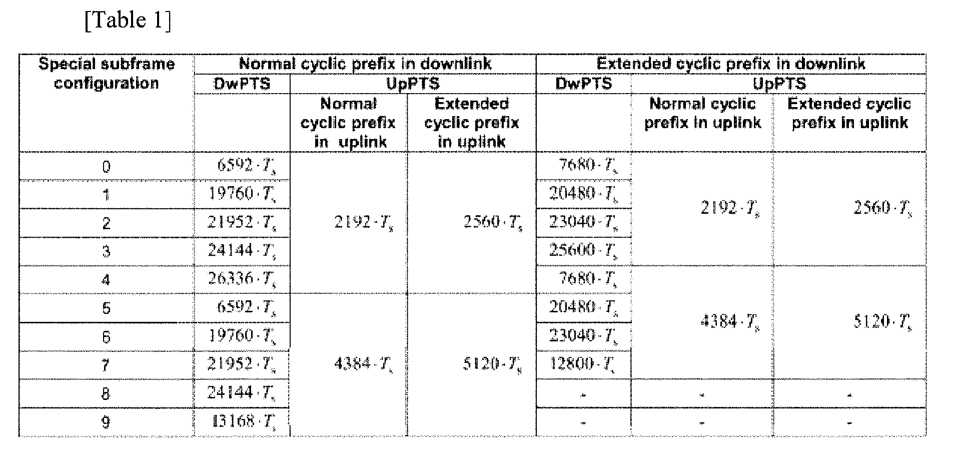

In the meantime, the structure of the type 2 radio frame, that is, uplink/downlink configuration (UL/DL configuration) in the TDD system is as illustrated in Table 2 below.

**[Table 2]**

| **Uplink-downlink configuration** | **Downlink-to-Uplink Switch-point periodicity** | **Subframe number** | | | | | | | | | |
|---|---|---|---|---|---|---|---|---|---|---|---|
| | | **0** | **1** | **2** | **3** | **4** | **5** | **6** | **7** | **8** | **9** |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

In the above Table 2, D means the downlink subframe, U means the uplink subframe, and S means the special subframe. Also, Table 2 also illustrates a downlink-uplink switching period in the uplink/downlink subframe configuration of each system.

The structure of the aforementioned radio frame is only exemplary, and various modifications may be made in the number of subframes included in the radio frame, the number of slots included in the subframe, or the number of symbols included in the slot.

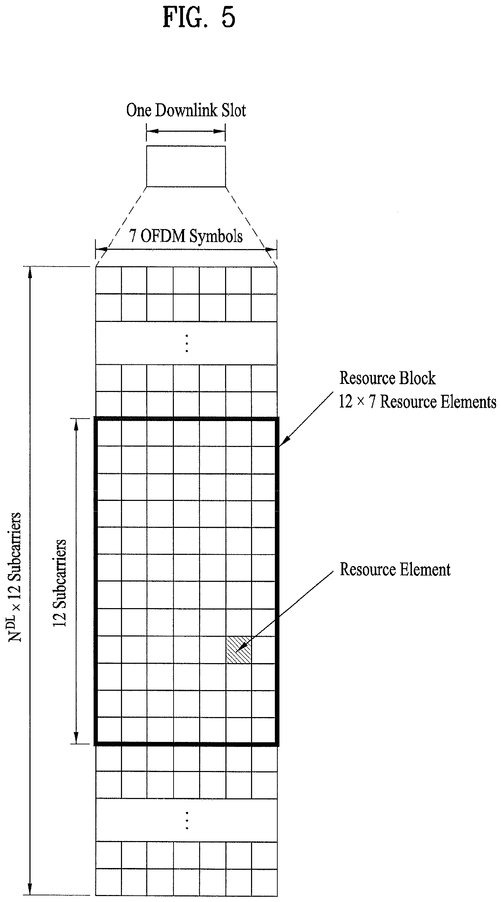

FIG. 5 illustrates a resource grid for a downlink slot.

Referring to FIG. 5, a DL slot includes N_symb^DL OFDM symbols in a time domain and N_RB^DL resource blocks in a frequency domain. Since each of the resource blocks includes N_SC^RB subcarriers, the DL slot includes N_RB^DL × N_SC^RB subcarriers in the frequency domain. Although FIG. 5 shows an example in which the DL slot includes 7 OFDM symbols and the resource block includes 12 subcarriers, the present invention is not limited thereto. For instance, the number of OFDM symbols included in the DL slot can vary depending to a length of a cyclic prefix (CP).

Each element on a resource grid is referred to as a resource element (RE) and a single resource element is indicated by one OFDM symbol index and one subcarrier index. A single RB is configured with N_symb^DL × N_SC^RB resource elements. The number (N_RB^DL) of resource blocks included in the DL slot depends on a DL transmission bandwidth configured in a cell.

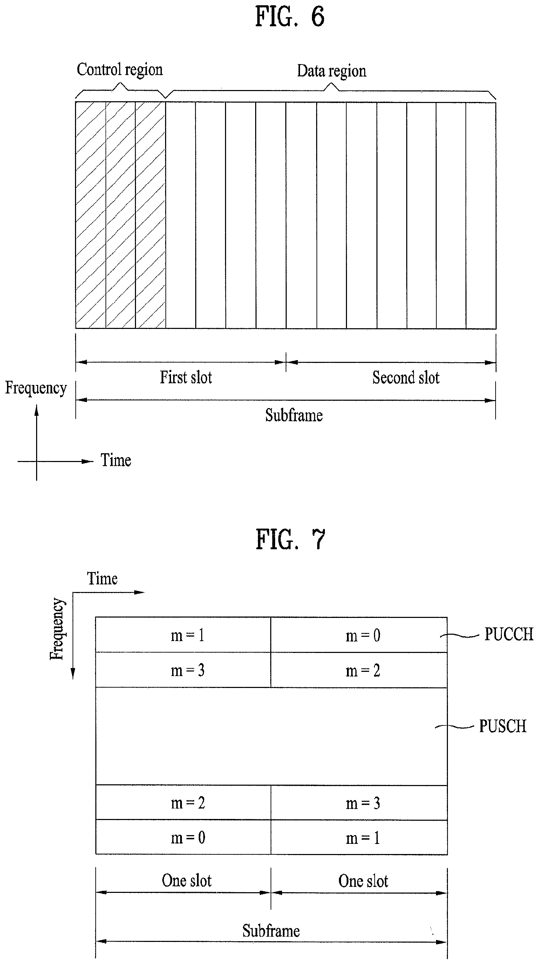

FIG. 6 illustrates a structure of a downlink radio frame.

Referring to FIG. 6, up to 3 (or 4) OFDM symbols located at a head part of a first slot of a subframe correspond to a control region to which a control channel is assigned. And, the rest of OFDM symbols correspond to a data region to which PDSCH (physical downlink shared channel) is assigned. For example, DL control channels used in the LTE system may include a PCFICH (physical control format indicator channel), a PDCCH (physical downlink control channel), a PHICH (physical hybrid ARQ indicator channel) and the like. The PCFICH is transmitted on a first OFDM symbol of a subframe and carries information on the number of OFDM symbols in the subframe used for control channel transmission. The PHICH carries an HARQ ACK/NACK (hybrid automatic repeat request acknowledgment/negative-acknowledgment) signal in response to UL transmission.

Control information transmitted on the PDCCH is called DCI (downlink control information). The DCI includes resource allocation information and other control information for a user equipment or a user equipment group. For instance, the DCI may include UL/DL scheduling information, UL transmission (Tx) power control command and the like.

The PDCCH carries transmission format and resource allocation information of a DL-SCH (downlink shared channel), transmission format and resource allocation information of a UL-SCH (uplink shared channel), paging information on a PCH (paging channel), system information on a DL-SCH, resource allocation information of a higher-layer control message such as a random access response transmitted on a PDSCH, a Tx power control command set for individual user equipments in a user equipment group, a Tx power control command, activation indication information of a VoIP (voice over IP) and the like. A plurality of PDCCHs may be transmitted in a control region. A user equipment can monitor a plurality of PDCCHs. The PDCCH is transmitted on aggregation of one or more consecutive CCEs (control channel elements). In this case, the CCE is a logical assignment unit used in providing the PDCCH with a coding rate based on a radio channel state. The CCE corresponds to a plurality of REGs (resource element groups). The PDCCH format and the number of PDCCH bits are determined depending on the number of CCEs. A base station determines the PDCCH format in accordance with DCI to be transmitted to a user equipment and attaches CRC (cyclic redundancy check) to control information. The CRC is masked with an identifier (e.g., RNTI (radio network temporary identifier)) in accordance with an owner or a purpose of use. For instance, if a PDCCH is provided for a specific user equipment, CRC may be masked with an identifier (e.g., C-RNTI (cell-RNTI)) of the corresponding user equipment. If a PDCCH is provided for a paging message, CRC may be masked with a paging identifier (e.g., P-RNTI (paging-RNTI)). If a PDCCH is provided for system information (particularly, SIC (system information block)), CRC may be masked with an SI-RNTI (system information-RNTI). In addition, if a PDCCH is provided for a random access response, CRC may be masked with an RA-RNTI (random access-RNTI).

FIG. 7 illustrates a structure of an uplink subframe used in an LTE system.

Referring to FIG. 7, an uplink subframe includes a plurality (e.g., 2 slots) of slots. Each of the slots may include a different number of SC-FDMA symbols depending on a length of CP. The UL subframe may be divided into a data region and a control region in the frequency domain. The data region includes a PUSCH and is used to transmit such a data signal as audio and the like. The control region includes a PUCCH and is used to transmit UCI (uplink control information). The PUCCH includes an RB pair located at both ends of the data region on a frequency axis and is hopped on a slot boundary.

The PUCCH can be used to transmit the following control information.
- SR (scheduling request): This is information used to request a UL-SCH resource and is transmitted using an OOK (on-off keying) scheme.
- HARQ ACK/NACK: This is a response signal in response to a DL data packet on a PDSCH and indicates whether the DL data packet has been successfully received. 1-bit ACK/NACK is transmitted as a response to a single downlink codeword and 2-bit ACK/NACK is transmitted as a response to two downlink codewords.
- CSI (channel state information): This is feedback information on a downlink channel. The CSI includes a channel quality indicator (CQI). MIMO (multiple input multiple output) related feedback information includes a rank indicator (RI), a precoding matrix indicator (PMI), a precoding type indicator (PTI) and the like. 20-bit is used in each subframe.

The amount of control information (UCI) that a user equipment can transmit in a subframe depends on the number of SC-FDMA symbols available for transmission of the control information. The SC-FDMA symbols available for the transmission of the control information correspond to the rest of SC-FDMA symbols except SC-FDMA symbols used for transmitting a reference signal in the subframe. In case of a subframe in which a sounding reference signal (SRS) is configured, the last SC-FDMA symbol of the subframe is excluded from the SC-FDMA symbols available for the transmission of the control information. The reference signal is used for coherent detection of a PUCCH.

Hereinafter, D2D (UE-to-UE) communication will be described.

A D2D communication scheme can be mainly classified as a scheme supported by a network/coordination station (e.g., base station) and a scheme not supported by the network/coordination station.

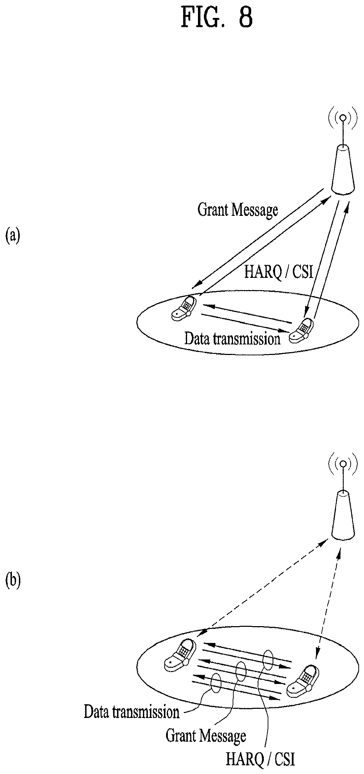

Referring to FIG. 8, FIG. 8 (a) illustrates a scheme in which the network/coordination station intervenes in transmission and reception of control signals (e.g., grant message), HARQ, channel state information, etc. and user equipments that perform D2D communication transmit and receive data only. On the other hand, FIG. 8 (b) illustrates a scheme in which the network provides minimum information (e.g., D2D connection information available in a corresponding cell) only but the user equipments that perform D2D communication establish links to transmit and receive data.

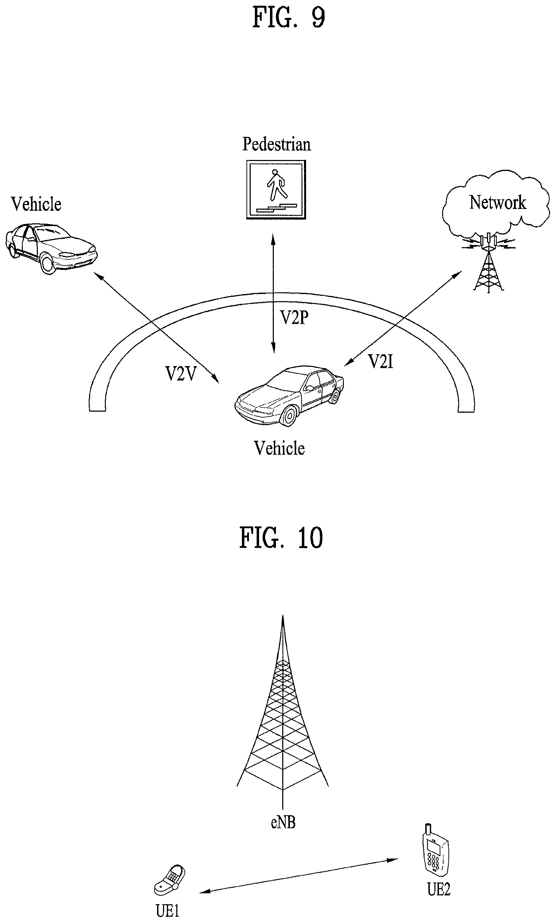

FIG. 9 is a diagram illustrating a V2X (vehicle to everything) communication environment.

If a vehicle accident occurs, many lives are lost, and serious property damage is caused. Thus, the demand for a technology capable of securing safety of pedestrians as well as safety of people in a vehicle has been increased. In addition, a technology based on hardware and software dedicated to the vehicle has been grafted onto the vehicle.

Recently, the LTE-based V2X (vehicle-to-everything) communication technology, which has been evolved from 3GPP, reflects the tendency in which the information technology (IT) is grafted onto the vehicle. A connectivity function is applied to some kinds of vehicles, and efforts are continuously made to research and develop vehicle-to-vehicle (V2V) communication, vehicle-to-infrastructure (V2I) communication, vehicle-to-pedestrian (V2P) communication, and vehicle-to-network (V2N) communication with the evolution of communication functions.

According to V2X communication, a vehicle consistently broadcasts information on its own locations, speeds, directions, etc. After receiving the broadcasted information, a nearby vehicle utilizes the information for accident prevention by recognizing movements of other adjacent vehicles.

That is, in a similar manner that an individual person carries a user equipment such as a smartphone, a smartwatch or the like, a specific type of user equipment (UE) can be installed in each vehicle. Here, a UE installed in a vehicle means a device that actually receives communication services from a communication network. For example, the UE installed in the vehicle can be accessed to an eNB in E-UTRAN and provided with communication services.

However, there are various items that should be considered for a process for implementing V2X communication in a vehicle. This is because astronomical costs are required for the installation of traffic safety facilities such as a V2X base station and the like. That is, to support V2X communication on all roads where the vehicle can move, it is necessary to install hundreds or thousands of V2X base stations or more. Moreover, since each network node accesses the Internet or a centralized control server using a wired network basically for stable communication with a server, installation and maintenance costs for the wired network are also high.

Hereinafter, resource allocation for performing V2X communication in the present invention is described. Although the present invention is described by being limited to a V2X scenario for clarity of the description, the present invention is applicable to other communication systems such as Device-to-Device (D2D) communication.

FIG. 10 is a reference diagram to describe UE-to-UE direct communication. When a UE performs communication with another UE using a direct wireless channel, as shown in FIG. 10, the present invention proposes a method of determining a resource to use for communication. This can be named UE-to-UE direct signal transmission/reception or Device-to-Device (D2D) communication, and further named a sidelink to be distinguished from Downlink (DL) and Uplink (UL) of the existing cellular communication. Furthermore, communication among multiple devices may be named Vehicle-to-Vehicle (V2V) communication in association with vehicles. Hence, although a UE means a user's UE (or car), if a network equipment such as an eNB transmits/receives a signal according to a UE-to-UE communication methodology, the network equipment can be regarded as a sort of UE to which the present invention is applicable. Moreover, an eNB can receive a D2D signal transmitted by a UE. Furthermore, a signal transmitting/receiving method of a UE designed for D2D transmission is applicable to an operation for a UE to transmit data to an eNB.

In the following description, UE1 may operate in a manner of selecting a resource unit corresponding to a specific resource from a resource pool meaning a set of a series of resources and transmitting a D2D signal using the corresponding resource unit. UE2 that is an Rx UE may receive a configuration of a resource pool for the UE1 to transmit a D2D signal and detect a signal of the UE1 within the corresponding resource pool. Here, if the UE1 is in a connection range of a base station, the UE1 can be informed of the resource pool by the base station. If the UE1 is out of the connection range of the base station, the UE1 may be informed of the resource pool by another UE or the resource pool may be determined as a previously determined resource. Generally, a resource pool is configured in a plurality of resource units. Each UE may select a single or a plurality of resource units and use the selected resource unit(s) for D2D signal transmission of its own.

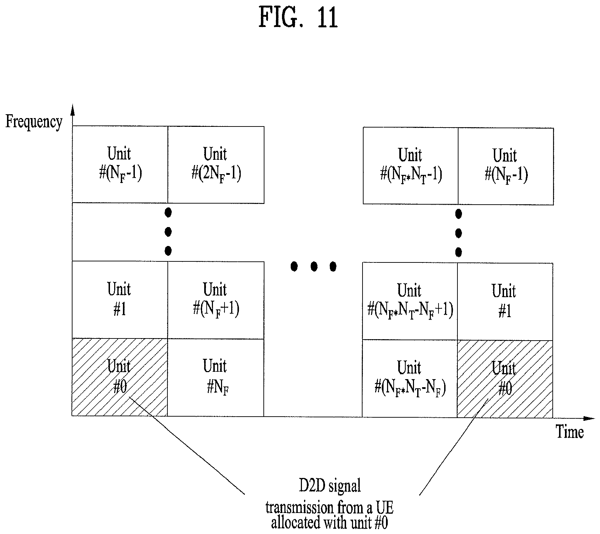

FIG. 11 shows one example of a configuration of resource unit. FIG. 11 illustrates a case that total NF^{∗}NT resource units are defined in a manner of dividing a full frequency resource into NF units and dividing a full time resource into NT units. In FIG. 11, a corresponding resource pool is repeated every NT subframes. Typically, as shown in FIG. 11, a single resource unit may appear in a manner of being repeated periodically. Or, an index of a physical resource unit, to which one logical resource unit is mapped to obtain a diversity effect in a time or frequency dimension, may change in a predetermined pattern according to a time. In such a resource unit structure, a resource pool may mean a set of resource units usable for a transmission by a UE intending to transmit a D2D signal.

Furthermore, a resource pool can be subdivided into various types. First of all, a resource pool can be divided according to a content of a transmitted D2D signal in each resource pool. For example, a content of a D2D signal can be classified as follows. And, a separate resource pool may be configured for each content.

• Scheduling Assignment (SA) (or sidelink control channel): Signal including information such as a location of a resource used for transmission of a following D2D data channel by each transmitting (Tx) UE, a Modulation and Coding Scheme (MCS) required for demodulation of a data channel, an MIMO transmission methodology and the like. Such an SA signal can be transmitted on the same resource unit by being multiplexed with D2D data. In this case, an SA resource pool may mean a resource pool configured with a resource on which an SA is transmitted by being multiplexed with D2D data.

• D2D data channel (sidelink shared channel): A resource pool configured with a resource used in transmitting user data by a Tx UE using a resource designated through SA. If a transmission on the same resource unit by being multiplexed with D2D data is possible, only a D2D data channel of a type except SA information is transmitted in a resource pool for the D2D data channel. So to speak, a resource element used in transmitting SA information on an individual resource unit within an SA resource pool is still used to transmit D2D data in a D2D data channel resource pool.

• Discovery message (or sidelink discovery channel): A resource pool for a message through which a Tx UE enables an adjacent UE to discover the Tx UE itself by transmitting information such as an ID of the Tx UE and the like.

• Synchronization signal/channel (or, sidelink synchronization signal, sidelink broadcast channel): A resource pool for a signal/channel to achieve an object that a Tx UE transmits a synchronization signal and information related to synchronization to enable an Rx (receiving) UE to match up time/frequency synchronization with that of the Tx UE.

Although SA and data may use a resource pool separated on a subframe, if a UE can simultaneously transmit SA and data in a single frame, two types of resource pools can be configured in the same subframe.

Moreover, in case that the aforementioned D2D signal content is identical, a different resource pool is usable according to a transmission/reception attribute of the D2D signal. For example, despite the same D2D data channel or discovery message, it can be divided into a different resource pool again depending on a transmission timing determining methodology (whether a D2D signal is transmitted at a reception timing of a synchronization reference signal, whether a D2D signal is transmitted by applying a constant timing advance at a repletion timing of a synchronization reference signal, etc.), a resource allocation methodology (e.g., whether a transmission resource of an individual signal is designated to an individual Tx UE by an eNB, or whether an individual Tx UE selects an individual signal transmission resource from a resource pool by itself), a signal format (e.g., the number of symbols occupied in a single subframe by each D2D signal, the number of subframes used for transmission of a single D2D signal), a signal strength from an eNB, a transmit power level of a D2D UE and the like.

For clarity of description, a method for an eNB to directly indicate a transmission resource of a D2D Tx UE in D2D communication is defined as Mode 1. And, a method for a UE to directly select a transmission resource, when a transmission resource region is configured in advance or an eNB designates a transmission resource region, is defined as Mode 2. In case of D2D discovery, a case that an eNB directly indicates a resource is defined as Type 2. And, a case that a UE directly selects a transmission resource from a previously configured resource region or a resource region indicated by an eNB is defined as Type 1.

Moreover, as described above, D2D may be called sidelink, SA may be called Physical Sidelink Control Channel (PSCCH), D2D synchronization signal may be called Sidelink Synchronization Signal (SSS), control channel carrying most basic information, which is transmitted together with SSS before D2D communication, may be called Physical Sidelink Broadcast Channel (PSBCH) or Physical D2D Synchronization Channel (PD2DSCH).

Furthermore, a signal for a specific UE to announce that it is located nearby (here, ID of the specific UE may be included in this signal) or such a channel may be called Physical Sidelink Discovery Channel (PSDCH).

According to Rel. 12 on LTE system, only a D2D communication UE transmits PSBCH together with SSS in D2D, whereby measurement of SSS is performed using DMRS of PSBCH. An out-coverage UE measures DMRS of PSBCH and then determines whether to become a synchronization source by measuring RSRP of this signal and the like.

It is expected that control and data channels coexist in V2X communication. It is assumed that when control and data channels are associated with each other, multiple vehicles transmit periodic messages. Assuming that a vehicle is a UE, the UE may know the resource locations of currently transmitted messages by decoding the control channel or performing energy sensing on the data channel. In addition, the UE may know even the resource locations to be used by other transmitting UEs.

As more and more communication devices have required higher communication capacity to transmit and receiving signals, the necessity for mobile broadband communication much improved than existing radio access technology (RAT) has increased. In addition, massive machine type communications (MTC) capable of providing various services anytime and anywhere by connecting a number of devices or things has been considered as an important issue in the next-generation communication systems. Moreover, a communication system design capable of supporting services/UEs sensitive to reliability and latency has been discussed. The introduction of new-generation RAT considering enhanced mobile broadband communication, massive MTC, ultra-reliable and low-latency communication (URLLC), etc. has been discussed. In the present disclosure, the corresponding technology is referred to as new RAT (NR) for simplicity.

Based on the above-described technical features, the present disclosure describes a resource allocation method for better automatic gain control (AGC) of a long transmission time interval (TTI) on resources where short and long TTIs coexist. Although the present disclosure focuses on a V2X scenario, the disclosure is also applicable to other communication systems where short and long TTIs coexist.

For convenience of description, transmission with a long TTI (long TTI transmission) is defined as a case in which signal transmission and reception is performed on time resources with a long TTI, and transmission with a short TTI (short TTI transmission) is defined as a case in which signal transmission and reception is performed on time resources with a short TTI.

In 3GPP Rel-15 LTE V2X communication, the use of a short TTI is under discussion. When a TTI composed of 14 OFDM symbols with a normal CP used in the LTE system is defined as a long TTI, a TTI composed of OFDM symbols fewer than those of the long TTI may be defined as a short TTI. For example, a TTI with 7 OFDM symbols may be defined as a short TTI.

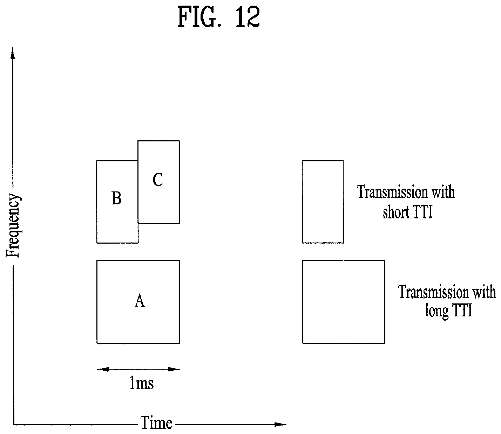

FIG. 12 is a reference diagram for explaining an embodiment of the present disclosure.

When short and long TTIs coexist as shown in FIG. 12, there may be a problem in AGC. That is, considering that the first symbol of a TTI is used for AGC in the current V2X communication, the first symbol of a short TTI or a part thereof may be used for the AGC. When a Rel-14 or Rel-15 UE intends to receive a signal associated with long TTI transmission, there may be short TTI transmission frequency division multiplexed (FDM) therewith in the same time interval. FIG. 12 shows an example thereof.

That is, it is assumed that when a signal associated with transmission A with a long TTI is received, there are transmission B and transmission C, each of which has a short TTI and is FDM therewith. Before receiving the signal associated with transmission A, a UE may attempt to perform AGC in a time interval corresponding to the first symbol of transmission A. Since a signal associated with transmission B is simultaneously received in the time interval, the UE may form a dynamic range by considering received power of transmission B and received power of transmission A while performing the AGC. However, when the signal associated with transmission A is demodulated after completion of the AGC, the dynamic range may be changed during a period in which a signal associated with transmission C is received. For example, if the power of transmission B is higher than that of transmission C, the dynamic range may increase. Thereafter, when transmission C is received, the dynamic range may relatively decrease. In this case, if there occurs a quantization loss while an analog signal is converted into a digital signal, reception may be performed. On the other hand, if the power of transmission C is higher than that of transmission B, the dynamic range may decrease. Thereafter, when transmission C is received, the dynamic range may relatively increase. In this case, many portions of the received signal may be lost, and as a result, a significant error may occur in terms of system operation.

Hence, the present disclosure proposes a resource allocation method for solving such a problem. First, a method related to short TTI transmission will be described.

According to the present disclosure, when long TTI transmission coexists with short TTI transmission, if a Rel-15 LTE V2X UE attempts to perform the short TTI transmission, the UE checks the strength of a signal (e.g., reference signal received power (RSRP) or a received signal strength indicator (RSSI)) in a time interval occupied by the long TTI transmission while performing sensing operation. The signal strength, RSRP, or RSSI may be measured by sensing, fed back by a receiving UE, or signaled by a base station.

After measuring the signal strength/RSRP/RSSI by performing the sensing operation during resource selection, the Rel-15 LTE V2X UE checks whether the signal strength/RSRP/RSSI is equal to or less than a predetermined threshold. If the signal strength/RSRP/RSSI is equal to or less than the predetermined threshold, the UE does not perform the short TTI transmission through frequency division multiplexing (FDM) in a time interval for the long TTI transmission within a period after the period in which the signal strength/RSRP/RSSI is measured during the resource selection but performs the short TTI transmission in another time interval within the corresponding period. In this case, the threshold may be indicated by higher layer signaling (e.g., RRC signaling). The threshold may be changed depending on the transmission power of the Rel-15 LTE V2X UE. For example, the Rel-15 LTE V2X UE may be configured to assume the threshold to be zero at all times.

The purpose of this embodiment is to prevent the Rel-15 LTE V2X UE from increasing the dynamic range of AGC due to its transmission. That is, when the Rel-15 LTE V2X UE receives the signal associated with the long TTI transmission FDM with the corresponding transmission, the Rel-15 LTE V2X UE may increase the dynamic range of the AGC, and as a result, the AGC may not be performed correctly.

Alternatively, according to the present disclosure, when long TTI transmission coexists with short TTI transmission, if a Rel-15 LTE V2X UE attempts to perform the short TTI transmission, the UE checks whether the short TTI transmission is FDM within a time interval occupied by the long TTI transmission while performing sensing operation. In this case, if the FDM short TTI transmission is started at the time when the long TTI transmission is started, the UE does not perform the short TTI transmission during a time interval for the long TTI transmission in a next period (however, the UE may perform the short TTI transmission through FDM such that it is started at the time when the long TTI transmission is started).

For example, referring to FIG. 12, if transmission A and transmission B are detected during sensing, transmission C is not performed. However, during a time interval for transmission B, short TTI transmission FDM with transmission A may be performed together with transmission B. The purpose of this embodiment is to maintain the dynamic range of AGC performed on the first symbol of the time interval occupied by the long TTI transmission.

Further, according to the present disclosure, when long TTI transmission coexists with short TTI transmission, if a Rel-15 LTE V2X UE attempts to perform the short TTI transmission and if the short TTI transmission is FDM within a time interval occupied by the long TTI transmission, the UE measures the strength/RSRP/RSSI of signals of short and long TTIs in a time interval occupied by the short TTI transmission while performing sensing operation. If the FDM short TTI transmission is performed within the time interval occupied by the long TTI transmission, the signal strength/RSRP/RSSI is measured only within the time interval during which the short TTI transmission is performed. The signal strength, RSRP, or RSSI may be measured by sensing, fed back by a receiving UE, or signaled by a base station.

After measuring the signal strength/RSRP/RSSI by performing the sensing operation during resource selection, the Rel-15 LTE V2X UE checks whether a difference between the signal strength/RSRP/RSSI and the transmission power of the Rel-15 LTE V2X UE is equal to or more than a predetermined threshold. If the difference is equal to or more than the predetermined threshold, the UE does not perform the short TTI transmission through FDM during a time interval for the long TTI transmission within a next period after the period in which AGC is performed during the resource selection. On the other hand, when the difference is less than the predetermined threshold, if the resource selection is performed such that the short TTI transmission is FDM within the time interval for the long TTI transmission, the short TTI transmission started at the same time when the long TTI transmission is started may be preferentially FDM.

Further, the threshold may be indicated by higher layer signaling (e.g., RRC signaling). The threshold may be changed depending on the transmission power of the Rel-15 LTE V2X UE.

The purpose of this embodiment is to prevent that the Rel-15 LTE V2X UE increases the dynamic range of AGC more than a predetermined level due to its transmission upon receiving a signal associated with the long TTI transmission FDM with corresponding transmission.

As another example of the present disclosure, when long TTI transmission coexists with short TTI transmission, if a Rel-15 LTE V2X UE attempts to perform the short TTI transmission, the UE checks whether the short TTI transmission is FDM within a time interval occupied by the long TTI transmission while performing sensing operation.

When the short TTI transmission is FDM within the time interval occupied by the long TTI transmission, if the FDM short TTI transmission is not started at the time when the long TTI Transmission is started and if the short TTI transmission is to be performed during a time interval for the long TTI transmission in a next period, the short TTI transmission is preferentially performed at the time when the long TTI transmission is started.

The purpose of this embodiment is to maintain the dynamic range of AGC performed on the first symbol of the time interval occupied by the long TTI transmission.

Hereinafter, a case in which a Rel-15 LTE V2X UE performs long TTI transmission will be described.

According to the present disclosure, when long TTI transmission coexists with short TTI transmission, if a Rel-15 LTE V2X UE attempts to perform the long TTI transmission, the UE measures the strength of a signal/RSRP/RSSI in a time interval occupied by the short TTI transmission while performing sensing operation. The signal strength, RSRP, or RSSI may be measured by sensing, fed back by a receiving UE, or signaled by a base station.

After measuring the signal strength/RSRP/RSSI by performing the sensing operation during resource selection, the Rel-15 LTE V2X UE checks whether the signal strength/RSRP/RSSI is equal to or more than a predetermined threshold. If the signal strength/RSRP/RSSI is equal to or more than the predetermined threshold, the UE does not perform the long TTI transmission through FDM during a time interval within a next period after the period where the signal strength/RSRP/RSSI is measured but performs the long TTI transmission in another time interval.

In this case, the threshold may be indicated by higher layer signaling (e.g., RRC signaling). The threshold may be changed depending on the transmission power of the Rel-15 LTE V2X UE.

According to the present disclosure, it is possible to prevent the Rel-15 LTE V2X UE from increasing the dynamic range of AGC. That is, if another UE receives the long TTI transmission for the Rel-15 LTE V2X UE, the Rel-15 LTE V2X UE may increase the dynamic range of the AGC, and as a result, the AGC may not be performed correctly.

According to another example of the present disclosure, when long TTI transmission coexists with short TTI transmission and when a Rel-15 LTE V2X UE attempts to perform the long TTI transmission, if the time when the short TTI transmission is started in a next period is different from the time when the UE performs the long TTI transmission and if the short TTI transmission is FDM within a time interval during which the UE performs the long TTI transmission, the UE does not perform the long TTI transmission in a time interval where the short TTI transmission overlap with the long TTI transmission. However, the long TTI transmission may be FDM and transmitted such that the long TTI transmission and the short TTI transmission are started at the same time.

For example, referring to FIG. 12, if transmission C is detected during sensing, transmission A is not performed. However, if it is detected during the sensing that transmission B has the same TTI starting time, transmission A may be performed.

According to the present disclosure, it is possible to maintain the dynamic range of AGC performed on the first symbol of the time interval occupied by the long TTI transmission.

According to a further example of the present disclosure, when long TTI transmission coexists with short TTI transmission, if a Rel-15 LTE V2X UE attempts to perform the long TTI transmission, the UE measures the strength of a signal/RSRP/RSSI in a time interval occupied by the short TTI transmission while performing sensing operation. The signal strength, RSRP, or RSSI may be measured by sensing, fed back by a receiving UE, or signaled by a base station.

After measuring the signal strength/RSRP/RSSI by performing the sensing operation during resource selection, the Rel-15 LTE V2X UE checks whether a difference between the signal strength/RSRP/RSSI and the power of the long TTI transmission performed by the Rel-15 LTE V2X UE is equal to or more than a predetermined threshold. If the difference is equal to or more than the predetermined threshold, the UE does not perform the long TTI transmission through FDM during a time interval for the long TTI transmission within a next period after the period during which the signal strength/RSRP/RSSI is measured but performs the long TTI transmission in another time interval.

The threshold may be indicated by higher layer signaling (e.g., RRC signaling). The threshold may be changed depending on the transmission power of the Rel-15 LTE V2X UE.

The purpose of this embodiment is to prevent the Rel-15 LTE V2X UE from increasing the dynamic range of AGC. That is, if another UE receives the long TTI transmission for the Rel-15 LTE V2X UE, the Rel-15 LTE V2X UE may increase the dynamic range of the AGC, and as a result, the AGC may not be performed correctly.

Although the above-described embodiments may be implemented independently, at least one of the embodiments may be implemented in combination.

Further, according to the present disclosure, signal interpolation may be performed by considering a TTI. When long TTI transmission coexists with short TTI transmission, a Rel-15 LTE V2X UE may perform AGC whenever the UE receives the short TTI transmission. Specifically, if the short TTI transmission is performed N times in a time interval for the long TTI transmission, the AGC is performed N times. Since the phase and amplitude may be slightly changed when the AGC is performed, the Rel-15 LTE V2X UE may be configured to perform the AGC upon receiving the long TTI transmission and then perform interpolation between DMRSs mapped to an interval in which the AGC is performed.

For example, referring to FIG. 12, assuming that transmission A is performed on 14 OFDM symbols with duration of 1 ms (DMRSs are mapped to OFDM symbols #2, #5, #8, and #11) and each of transmission B and transmission C is performed on 7 OFDM symbols with duration of 0.5 ms, if AGC is performed on the first symbols of transmission B and transmission C in order to receive all of transmission A, transmission B, and transmission C, interpolation may be performed between DMRSs #2 and #5 when transmission A is demodulated. However, the interpolation may not be performed between DMRSs #5 and #8.

Meanwhile, if there is no significant channel variation when the AGC is performed, the phase and amplitude changed by the AGC may be estimated, and thus, the interpolation may be performed between all DMRSs when the long TTI transmission is received. Therefore, if the speed of a vehicle or the relative speed is low, the interpolation may be performed between all DMRSs. On the contrary, when the speed is high, the AGC may be performed first, and then the interpolation may be performed between the DMRSs mapped to the interval in which the AGC is performed.

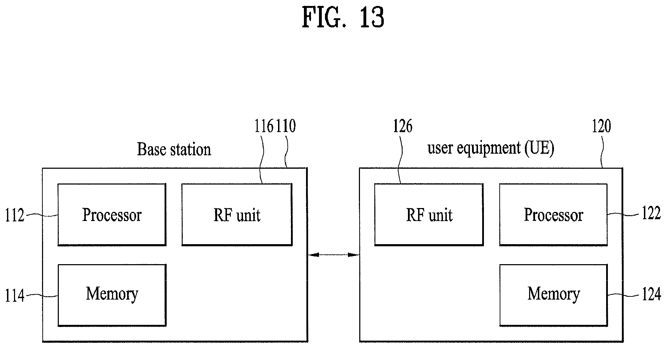

FIG. 13 illustrates a base station (BS) and a user equipment (UE) applicable to an embodiment of the present invention.

If a relay node is included in a wireless communication system, backhaul link communication is performed between the BS and the relay node, and access link communication is performed between the relay node and the UE. Therefore, the BS or UE shown in the drawing may be replaced with the relay node in some cases.

Referring to FIG. 13, a wireless communication system includes a base station (BS) 110 and a user equipment (UE) 120. The base station 110 includes a processor 112, a memory 114 and an RF (radio frequency) unit 116. The processor 112 can be configured to implement the procedures and/or methods proposed in the present invention. The memory 114 is connected to the processor 112 and stores various kinds of information related to operations of the processor 112. The RF unit 116 is connected to the processor 112 and transmits and/or receives radio or wireless signals. The user equipment 120 includes a processor 122, a memory 124 and an RF unit 126. The processor 122 can be configured to implement the procedures and/or methods proposed in the present invention. The memory 124 is connected to the processor 122 and stores various kinds of information related to operations of the processor 122. The RF unit 126 is connected to the processor 122 and transmits and/or receives radio or wireless signals. The base station 110 and/or the user equipment 120 can have a single antenna or multiple antennas.

The above-described embodiments may correspond to combinations of elements and features of the present invention in prescribed forms. And, it may be able to consider that the respective elements or features may be selective unless they are explicitly mentioned. Each of the elements or features may be implemented in a form failing to be combined with other elements or features. Moreover, it may be able to implement an embodiment of the present invention by combining elements and/or features together in part. A sequence of operations explained for each embodiment of the present invention may be modified. Some configurations or features of one embodiment may be included in another embodiment or can be substituted for corresponding configurations or features of another embodiment. And, it is apparently understandable that a new embodiment may be configured by combining claims failing to have relation of explicit citation in the appended claims together or may be included as new claims by amendment after filing an application.

In this disclosure, a specific operation explained as performed by a base station can be performed by an upper node of the base station in some cases. In particular, in a network constructed with a plurality of network nodes including a base station, it is apparent that various operations performed for communication with a user equipment can be performed by a base station or other network nodes except the base station. In this case, 'base station' can be replaced by such a terminology as a fixed station, a Node B, an eNodeB (eNB), an access point and the like.

The embodiments of the present invention may be implemented using various means. For instance, the embodiments of the present invention may be implemented using hardware, firmware, software and/or any combinations thereof. In case of the implementation by hardware, one embodiment of the present invention may be implemented by at least one of ASICs (application specific integrated circuits), DSPs (digital signal processors), DSPDs (digital signal processing devices), PLDs (programmable logic devices), FPGAs (field programmable gate arrays), processor, controller, microcontroller, microprocessor and the like.

In case of the implementation by firmware or software, one embodiment of the present invention may be implemented by modules, procedures, and/or functions for performing the above-explained functions or operations. Software code may be stored in a memory unit and may be then driven by a processor.

The memory unit may be provided within or outside the processor to exchange data with the processor through the various means known to the public.

### INDUSTRIAL APPLICABILITY

The method of allocating resources for multiple signals in a wireless communication system and apparatus therefor are applicable to various wireless communication systems.

## Claims

1. A method of allocating resources for multiple frequency division multiplexed, FDM, signals by a user equipment, UE, in a wireless communication system, the method comprising:
when a first signal with a first transmission time interval, TTI, is FDM with a second signal with a second TTI in a first period, performing sensing on time resources corresponding to the second TTI, wherein an amount of time resources occupied by the first TTI is less than that occupied by the second TTI; and
allocating time resources for the first signal in a second period based on a sensing result,
wherein the first signal is configured such that interpolation is performed between reference signals mapped to an interval in which same automatic gain control, AGC, is performed.

2. The method of claim 1, wherein when it is determined based on the sensing results that a measurement value of the first signal is equal to or less than a threshold, the first signal is allocated to time resources unoccupied by the second TTI in the second period.

3. The method of claim 1, wherein when it is determined based on the sensing results that a starting point of the first TTI is different from that of the second TTI, the first signal is allocated to time resources unoccupied by the second TTI in the second period.

4. The method of claim 3, wherein when the starting point of the first TTI is equal to that of the second TTI, resource allocation is performed such that the first and second signals are FDM in the second period.

5. The method of claim 1, wherein when it is determined based on the sensing results that a difference between strength of each of the first and second signals and transmission power of a transmitting UE is equal to or more than a threshold, the first signal is allocated to time resources unoccupied by the second TTI in the second period.

6. The method of claim 1, wherein when it is determined based on the sensing results that a starting point of the first TTI is different from that of the second TTI, the first signal is allocated starting from a time resource corresponding to the starting point of the second TTI in the second period.

7. The method of claim 1, wherein the sensing results include reference signal receiver power, RSRP, or a received signal strength indicator, RSSI.

8. The method of claim 1, wherein the second TTI is composed of 14 orthogonal frequency division multiplexing, OFDM, symbols, and wherein the first TTI is composed of 7 OFDM symbols.

9. A user equipment, UE, (120) for allocating resources for multiple frequency division multiplexed, FDM, signals in a wireless communication system, the UE (120) comprising:
a radio frequency unit (126); and
a processor (122),
wherein the processor (122) is configured to:
when a first signal with a first transmission time interval, TTI, is FDM with a second signal with a second TTI in a first period, perform sensing on time resources corresponding to the second TTI, wherein an amount of time resources occupied by the first TTI is less than that occupied by the second TTI; and
allocate time resources for the first signal in a second period based on sensing results,
wherein the first signal is configured such that interpolation is performed between reference signals mapped to an interval in which same automatic gain control, AGC, is performed.

## Patentansprüche

1. Verfahren zur Zuweisung von Ressourcen für mehrere frequenzmultiplexierte, FDM, Signale durch ein Benutzergerät, UE, in einem Drahtloskommunikationssystem, wobei das Verfahren umfasst:
wenn ein erstes Signal mit einem ersten Übertragungszeitintervall, TTI, FDM mit einem zweiten Signal mit einem zweiten TTI in einer ersten Periode ist, Durchführen einer Erfassung auf Zeitressourcen, die dem zweiten TTI entsprechen, wobei eine Menge von Zeitressourcen, die von dem ersten TTI belegt sind, kleiner ist als die vom zweiten TTI belegte; und
Zuweisen von Zeitressourcen für das erste Signal in einer zweiten Periode basierend auf einem Erfassungsergebnis,
wobei das erste Signal so konfiguriert ist, dass eine Interpolation zwischen Referenzsignalen durchgeführt wird, die auf ein Intervall abgebildet sind, in dem dieselbe automatische Verstärkungsregelung, AGC, durchgeführt wird.

2. Verfahren nach Anspruch 1, wobei, wenn basierend auf den Erfassungsergebnissen bestimmt wird, dass ein Messwert des ersten Signals kleiner als ein oder gleich einem Schwellenwert ist, das erste Signal Zeitressourcen zugewiesen wird, die von dem zweiten TTI in der zweiten Periode nicht belegt sind.

3. Verfahren nach Anspruch 1, wobei, wenn basierend auf den Erfassungsergebnissen bestimmt wird, dass ein Startpunkt des ersten TTI von dem des zweiten TTI verschieden ist, das erste Signal Zeitressourcen zugewiesen wird, die von dem zweiten TTI in der zweiten Periode nicht belegt sind.

4. Verfahren nach Anspruch 3, wobei, wenn der Startpunkt des ersten TTI gleich dem des zweiten TTI ist, eine Ressourcenzuweisung durchgeführt wird, so dass das erste und das zweite Signal in der zweiten Periode FDM sind.

5. Verfahren nach Anspruch 1, wobei, wenn basierend auf den Erfassungsergebnissen bestimmt wird, dass eine Differenz zwischen einer Stärke jedes des ersten und des zweiten Signals und einer Übertragungsleistung eines sendenden UE gleich einem oder größer als ein Schwellenwert ist, das erste Signal Zeitressourcen zugewiesen wird, die von dem zweiten TTI in der zweiten Periode nicht belegt sind.

6. Verfahren nach Anspruch 1, wobei, wenn basierend auf den Erfassungsergebnissen bestimmt wird, dass ein Startpunkt des ersten TTI von dem des zweiten TTI verschieden ist, das erste Signal beginnend mit einer Zeitressource entsprechend dem Startpunkt des zweiten TTI in der zweiten Periode zugewiesen wird.

7. Verfahren nach Anspruch 1, wobei die Erfassungsergebnisse eine Referenzsignalempfangsleistung, RSRP, oder einen Empfangssignalstärkeindikator, RSSI, umfassen.

8. Verfahren nach Anspruch 1, wobei das zweite TTI aus 14 orthogonalen Frequenzmultiplex-, OFDM, Symbolen besteht und wobei das erste TTI aus 7 OFDM-Symbolen besteht.

9. Benutzergerät, UE, (120) zur Zuweisung von Ressourcen für mehrere frequenzmultiplexierte, FDM, Signale in einem Drahtloskommunikationssystem, wobei das UE (120) umfasst:
eine Funkfrequenzeinheit (126); und
einen Prozessor (122),
wobei der Prozessor (122) eingerichtet ist zum:
wenn ein erstes Signal mit einem ersten Übertragungszeitintervall, TTI, FDM mit einem zweiten Signal mit einem zweiten TTI in einer ersten Periode ist, Durchführen einer Erfassung auf Zeitressourcen, die dem zweiten TTI entsprechen, wobei eine Menge von Zeitressourcen, die von dem ersten TTI belegt sind, kleiner ist als die vom zweiten TTI belegte; und
Zuweisen von Zeitressourcen für das erste Signal in einer zweiten Periode basierend auf Erfassungsergebnissen,
wobei das erste Signal so konfiguriert ist, dass eine Interpolation zwischen Referenzsignalen durchgeführt wird, die auf ein Intervall abgebildet sind, in dem dieselbe automatische Verstärkungsregelung, AGC, durchgeführt wird.

## Revendications

1. Procédé d'attribution de ressources pour plusieurs signaux multiplexés par répartition de la fréquence, FDM, par un équipement utilisateur, UE, dans un système de communication sans fil, le procédé consistant à :
lorsqu'un premier signal avec un premier intervalle de temps de transmission, TTI, est FDM avec un second signal avec un second TTI dans une première période, procéder à la détection sur des ressources temporelles correspondant au second TTI, une quantité de ressources temporelles occupées par le premier TTI étant inférieure à celle occupée par le second TTI ; et
attribuer des ressources temporelles pour le premier signal dans une seconde période en fonction du résultat de détection,
dans lequel le premier signal est configuré de sorte que l'interpolation est effectuée entre des signaux de référence mappées à un intervalle dans lequel le même contrôle de gain automatique, AGC, est effectué.

2. Procédé selon la revendication 1, dans lequel lorsqu'il est déterminé sur la base des résultats de détection qu'une valeur de mesure du premier signal est inférieure ou égale à un seuil, le premier signal est attribué à des ressources temporelles inoccupées par le second TTI dans la seconde période.

3. Procédé selon la revendication 1, dans lequel lorsqu'il est déterminé sur la base des résultats de détection qu'un point de départ du premier TTI est différent de celui du second TTI, le premier signal est attribué à des ressources temporelles inoccupées par le second TTI dans la seconde période.

4. Procédé selon la revendication 3, dans lequel lorsque le point de départ du premier TTI est égal à celui du second TTI, l'attribution de ressource est effectuée de sorte que les premier et second signaux soient FMD dans la seconde période.

5. Procédé selon la revendication 1, dans lequel lorsqu'il est déterminé sur la base des résultats de détection qu'une différence entre les forces de chacun des premier et second signaux et la puissance de transmission d'un UE de transmission est supérieure ou égale à un seuil, le premier signal est attribué à des ressources temporelles inoccupées par le second TTI dans la seconde période.

6. Procédé selon la revendication 1, dans lequel lorsqu'il est déterminé sur la base des résultats de détection qu'un point de départ du premier TTI est différent de celui du second TTI, le premier signal est attribué en commençant par une ressource temporelle correspondant au point de départ du second TTI dans la seconde période.

7. Procédé selon la revendication 1, dans lequel les résultats de détection comprennent la puissance du récepteur de signal de référence, RSRP, ou un indicateur de la force du signal reçu, RSSI.

8. Procédé selon la revendication 1, dans lequel le second TTI est composé de 14 symboles de multiplexage par répartition orthogonale de la fréquence, OFDM, et dans lequel le premier TTI est composé de 7 symboles OFDM.

9. Équipement utilisateur, UE, (120) pour attribuer des ressources pour plusieurs signaux multiplexés par répartition de la fréquence, FDM, dans un système de communication sans fil, l'UE (120) comprenant :
une unité de radiofréquence (126) ; et
un processeur (122),
dans lequel le processeur (122) est configuré pour :
lorsqu'un premier signal avec un premier intervalle de temps de transmission, TTI, est FDM avec un second signal avec un second TTI dans une première période, procéder à la détection sur des ressources temporelles correspondant au second TTI, une quantité de ressources temporelles occupées par le premier TTI étant inférieure à celle occupée par le second TTI ; et
attribuer des ressources temporelles pour le premier signal dans une seconde période en fonction du résultat de détection,
dans lequel le premier signal est configuré de sorte que l'interpolation est effectuée entre des signaux de référence mappés à un intervalle dans lequel le même contrôle de gain automatique, AGC, est effectué.
